# EUROPEAN PATENT SPECIFICATION

(11) **EP 1 393 851 B1**
(45) Date of publication and mention of the grant of the patent: **25.01.2006**
(21) Application number: 03010683.5
(22) Date of filing: 13.05.2003
(51) Int. Cl.: B23Q 3/10, B23Q 3/18, B23Q 7/04, B23Q 37/00, B25J 15/00, B25B 5/00

(54) **Assembly for gripping workpieces**
Einrichtung zum Festhalten von Werkstücken
Dispositif pour fixer des pièces

(30) Priority: 17.05.2002 IT TO20020421
(43) Date of publication of application: 03.03.2004
(73) Proprietor: COMAU S.p.A., 10095 Grugliasco (Torino) (IT)
(72) Inventor: Grosso, Clemente, 10095 Grugliasco (Torino) (IT)
(74) Representative: Marchitelli, Mauro

(56) References cited:
- WO-A-01/08855
- DE-C- 10 014 785
- US-A1- 2001 004 431

## Description

The present invention relates to the field of equipment which can be used by industrial robots for gripping workpieces or assemblies being processed or assembled.

Equipment of this type is used, for example, in the automobile industry for supporting assemblies or subassemblies of bodies of motor vehicles during welding operations and/or assembly operations of various kinds, which are typically performed with automatic welding devices and/or assembly devices.

In the above applications, there exists, of course, the need to guarantee that the industrial robot will support the workpiece or assembly, on which it is necessary to operate in a rigorously pre-determined precise position. Gripping equipment used by robots for the aforesaid purposes present, of course, a part designed for being connected directly to the robot and a plurality of reference and positioning elements designed to engage with the workpiece or the assembly that is to be supported, which guarantee that the latter will find itself in a pre-determined position with respect to said reference and positioning elements. Obviously, it is equally essential that the structure of the gripping equipment should present a rigorously defined rigid geometry, which will guarantee that the various reference and positioning elements will find themselves in rigorously pre-determined spatial positions with respect to the part of the equipment that is directly connected to the robot.

In the past, for the purpose of guaranteeing a rigid and precise geometry of the equipment there has usually been adopted gripping equipment having a structure made of metal elements welded together. If, on the one hand, said solution might guarantee a structure with a rigorously defined geometry, on the other hand it entails considerable problems when it is necessary to reproduce the same starting geometry, for example, after possible damage of the structure following upon a collision with an external body during use of the equipment by the robot. Obviously, in such an eventuality it is neither possible to guarantee that the deformed welded structure will be brought back again to the initial geometry nor to certify that the structure will go back to the initial geometry in a simple and rapid way.

When an attempt is made to solve the aforesaid problem by adopting for the gripping equipment a structure consisting of elements connected to each other in a separable way, the new problem arises of guaranteeing that the assembled structure will have a rigorously precise and pre-determined geometry and above all that said geometry will be reproducible, for example after a deformation or failure of one or more of its components following upon an accidental collision, in a way that is simple, rapid and easily certifiable.

An equipment as set forth in the precharacterizing portion of claim 1 is known from US-A-2001/0004431.

The purpose of the present invention is to provide an effective and efficient solution to the aforesaid problem.

In order to achieve said purpose, the subject of the invention is an equipment having the features of claim 1.

Thanks to the characteristics indicated above, the equipment according to the invention is able to provide an efficient solution to all the problems set forth above. The fact that it is made up of modules connected together in an uncoupleable way obviously enables easy restoration of the modules which are deformed or anyway damaged, for example following upon accidental collisions, without there existing the need for replacing the entire structure. The use of components consisting of modules in the form of metal sectional elements simplifies and rationalizes assembly of the structure of the equipment. Finally, the pre-arrangement at pre-determined intervals of length of the aforesaid pairs of notches in the slits of the sectional elements, for the engagement of the guide bushings of the connection screws, provides a simple and at the same time extremely efficient means for guaranteeing convenient repeatability of the geometry of the structure. In practice, in fact, the various pairs of opposed notches define along the external surface of the sectional element a series of seats set at equal distances apart from one another, which can be used for positioning the connection screws. The said seats therefore provide in the sectional element a sort of indexing that enables for the user immediate identification of the point of connection, which is thus uniquely defined by counting the number of seats along the sectional element starting from one end of the sectional element up to the seat in which it is desired to engage the connection screw. The above basic principle can be used in all the connections between the sectional elements which make up the structure of the gripping equipment, as well as in the connection of the sectional elements with a component, typically a plate, designed to be connected to the industrial robot.

According to a further characteristic of the invention, the structure of the gripping equipment also includes, for supporting an element for positioning or for reference of the piece or assembly to be gripped, a modular reticular structure, which comprises bars with circular cross section and blocks for interconnection of said bars, in which there are provided reference devices for reference of the correct reciprocal position of each bar in relation to a respective block, each of said reference devices including a body that can be fixed on a bar and is provided with reference means that can be engaged with a respective block.

In a preferred example of embodiment, said body is made up of an annular element, having a hub, which is designed to be fitted on a bar and is provided with at least one radial hole for engagement of a connection pin for connection of the hub to the bar, and an annular ring or crown provided with a circumferential series of holes having axes which are parallel to the axis of the hub and can be engaged selectively by one axial connection pin for connection of said crown to a respective block.

Thanks to the aforesaid characteristics, the reticular structure with circular bars which supports each reference or positioning element may be assembled in an easy and rapid way, guaranteeing rigorous respect of the desired geometry.

Further characteristics and advantages of the invention will emerge clearly from the ensuing description with reference to the annexed drawings, which are provided purely by way of non-limiting example and in which:
- Figure 1 is a perspective view of an example of embodiment of equipment for gripping an assembly of a body of a motor vehicle, which can be used by an industrial robot;
- Figure 2 is a perspective view of an extruded sectional element of aluminium which constitutes a module of the structure of the equipment of Figure 1;
- Figure 2A is a view at an enlarged scale of a detail of Figure 2;
- Figure 3 is a perspective view of different possible embodiments of the top part of the equipment, said part being designed to be coupled with the industrial robot;
- Figure 4 is a cross-section taken along the line IV-IV of figure 3;
- Figure 5 is a perspective view at an enlarged scale of a reticular structure for supporting a positioning element; and
- Figure 6 is a view at an enlarged scale of a detail of Figure 5.

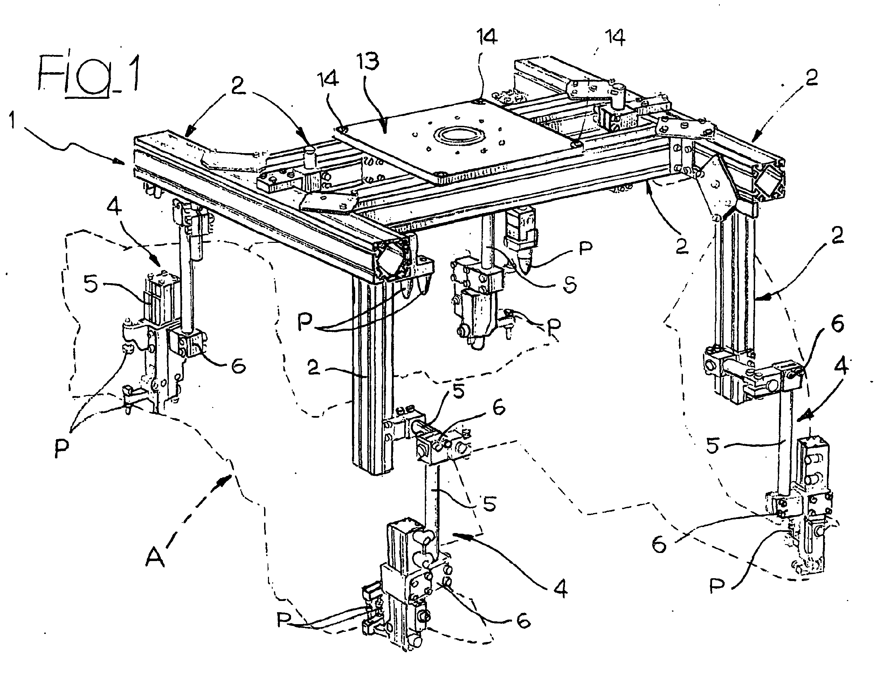

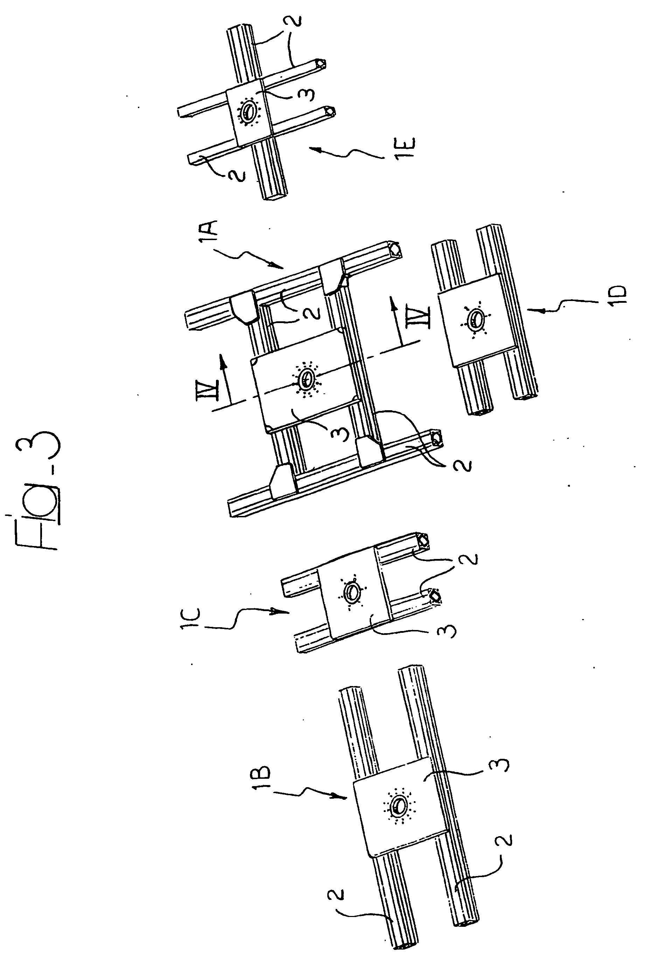

In Figure 1, the reference number 1 designates, as a whole, a piece of equipment which can be used by an industrial robot for gripping an assembly of a body of a motor vehicle, which is schematically illustrated in Figure 1 and is designated by A. The equipment 1 includes a modular reticular structure, defined by a plurality of modules 2, which are connected together by means of screw connections and are each made up of extruded sectional element made of metal, for example, aluminium. The reference number 3 designates a plate for connection of the equipment to an industrial robot. In the example of embodiment illustrated in Figure 1, the plate is connected on top of the two modules 2, which are parallel to one another and are, in turn, connected at their ends to two further modules 2 set parallel to one another and orthogonal to the modules of the first pair. The above configuration is also shown in Figure 3, where it is designated by 1A. Figure 3 illustrates possible variants of said configuration, which are designated by 1B, 1C, 1D and 1E, respectively.

As is also shown in Figure 1, coming down vertically from the top portion of the structure 1 are further modules 2.

The structure described above supports a plurality of positioning and/or reference elements for the assembly A, which are designated by P. The various reference elements P are connected to the reticular structure made up by the modules 2, by means of further reticular structures 4 comprising bars 5 with circular cross section and interconnection blocks 6.

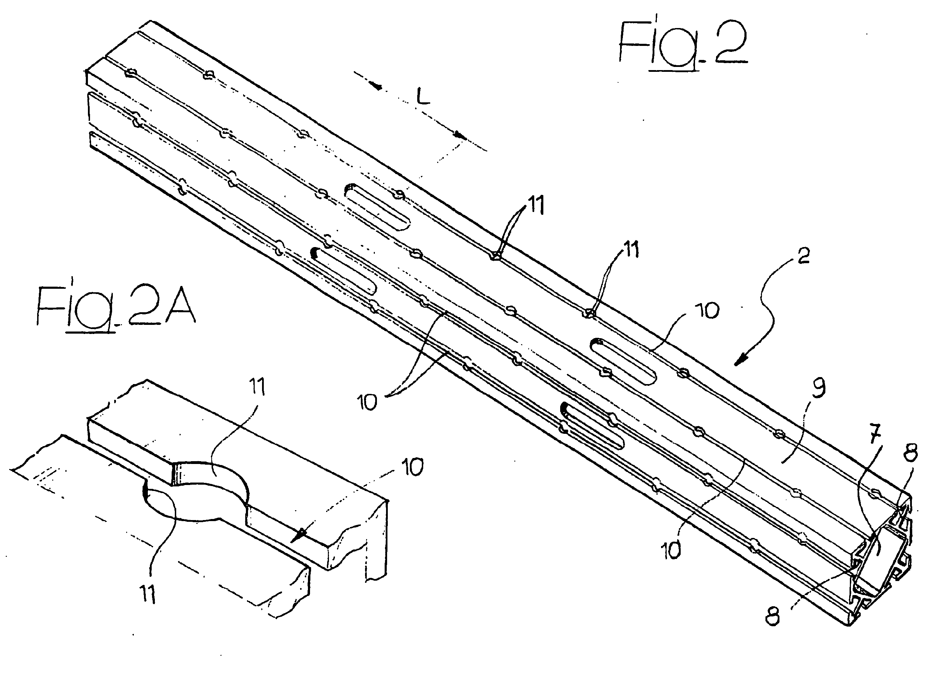

Figure 2 illustrates an example of module 2 made of an extruded sectional element of aluminium. In the example illustrated, the module 2 comprises a central channel 7, which is uniquely provided for the purpose of lightening the structure and has a substantially rhomboidal cross section, where each side of the rhombus faces towards a respective edge of the module 2, which has a substantially square cross section. Made in the wall of each side of the sectional element 2 are two longitudinal cavities 8 which give out onto the respective external surface 9 of the sectional element by means of a restricted inlet defined by a longitudinal slit 10.

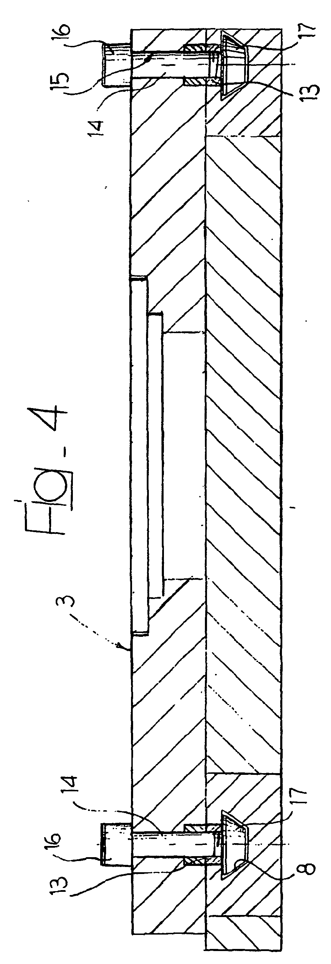

Provided along each longitudinal slit 10, at rigorously constant intervals of length L, are pairs of circular notches 11 (see the enlarged detail of Figure 2A) defining respective seats for guide bushings (two of said bushings can be seen in Figure 4 and are designated by 13) for engagement of the connection screws (which can be seen in Figure 4 and are designated by 14) of the various modules of the structure.

Figure 4 illustrates an example of connection with reference to the join between the plate 3 and the two modules 2 connected thereto. As may be seen, the plate 3 has holes 15 for engaging the connection screws 14. Each screw 14 has a head 16 which rests on top of the plate 3 and traverses a guide bushing 13 received in a seat defined by a pair of notches 11 in the sectional element 2. The longitudinal cavity 8 set immediately underneath receives a nut 17 for fixing the screw 16. The same connection, which is shown in Figure 4, can be naturally reproduced for joining the modules 2 to each other. Consequently, as may be seen, the entire reticular structure of the equipment is obtained by means of uncoupleable connections. At the same time, the distribution at regular intervals of the seats consisting of the pairs of facing notches 11 for the guide bushings 13 enables an immediate reference to be obtained for positioning the various connection screws. Each module 2 comes to form a component similar to the ones used in the game of "Meccano" (registered trademark), where the point of connection is immediately identified by counting the connection holes starting from one end of the component. In the case of the present invention, each module of the gripping equipment has an aligned distribution of seats set at equal distances apart which make it possible to reproduce any desired geometry whatsoever with extreme ease and rapidity.

Of course, the conformation of the cross section of the extruded sectional elements 2 constituting the modules of the structure can be any whatsoever and even altogether different from the one illustrated herein purely by way of example.

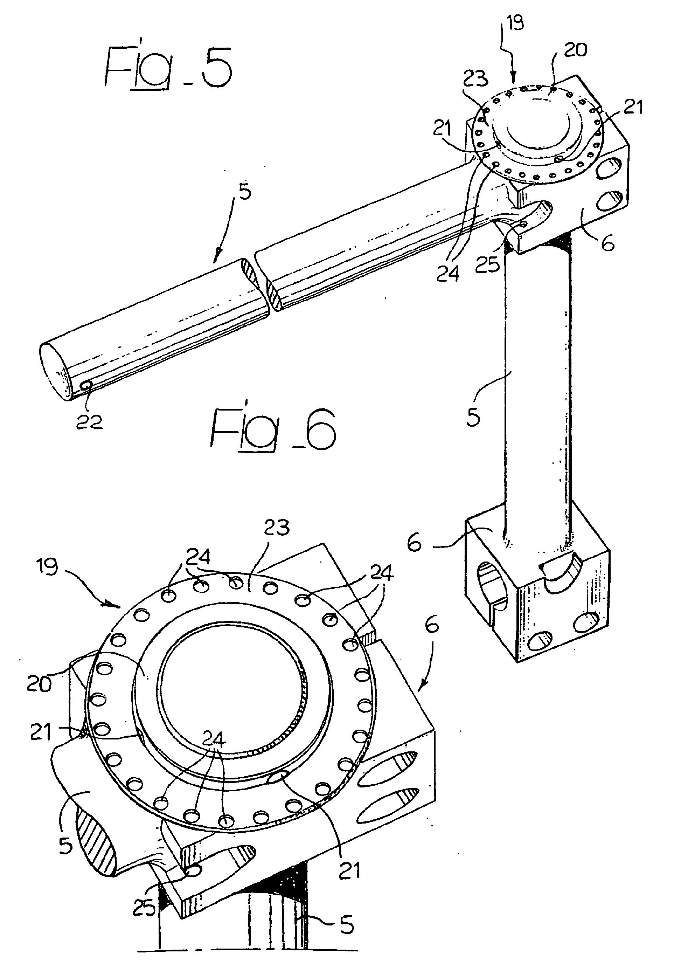

Figure 5 shows a detail of an example of reticular structure 4 for supporting a reference pin designed to engage a corresponding seat in the assembly being processed in order to guarantee precise positioning thereof. As may be seen also from Figure 1, the structure 4 is made up of bars 5 having a circular cross section, each one of which has one end rigidly connected to a block 6 with a cut that defines two gripping jaws 6a, 6b for gripping another bar in the passage 6c between the jaws, by means of securing bolts which engage holes 6d. The end of each bar 5 opposite to the block 6 is tightened in the block 6 of another bar.

There are moreover provided reference devices that guarantee precise positioning of each bar 5 in relation to a respective block 6. In the example illustrated in Figure 5, each of the said devices includes an annular element 19. The annular element 19 has a hub 20, which is fitted on a respective bar 5 and which has at least one radial hole 21 (in the example illustrated two radial holes are provided set at 90° from one another) for engaging connection pins designed to engage respective radial holes 22 (in Figure 5 a radial hole 22 can be seen at the other end of the bar 5) made on each end of the bar 5. The annular element 19 further includes a crown 23 with a circumferential series of holes 24 having an axis parallel to the axis of the hub 20 and designed to be engaged selectively by axial connection pins, designed to engage holes 25 obtained in the block 6 according to an axis parallel to the axis of the bar 5 on which the annular element 19 is fixed.

As may be seen, thanks to the use of reference devices 19, it is possible to guarantee in an easy and rapid way the desired geometry for the reticular structure 4.

In conclusion, the equipment according to the invention enables on the one hand a reproducibility thereof with simple, easy and rapid operations, and on the other hand guarantees the possibility of certifying the geometry of the structure itself in a way that is equally simple and rapid.

Of course, without prejudice to the principle of the invention, the details of construction and the embodiments may vary widely with respect to what is described and illustrated herein purely by way of example, without thereby departing from the scope of the present invention. For example, although the annexed claims refer explicitly to equipment designed for being used by an industrial robot, there is to be considered included in the scope of the present invention any structure for supporting or gripping pieces or assemblies undergoing processing or assembly that has the characteristics referred to in the annexed claims, even were the said structure not to be designed for being used by a robot.

## Claims

1. Equipment which can be used by an industrial robot for gripping pieces or assemblies being processed or assembled, comprising a modular reticular structure (1), defined by a plurality of modules (2), which are connected together by means of screw connections (14) and each of which is made up of a metal sectional element, having at least one longitudinal cavity (8) which gives out onto an external surface (9) of the sectional element by means of a longitudinal slit (10) of smaller width than that of the cavity (8),
**characterized in that** along each of said slits (10), at intervals of fixed pre-determined length (L), there are obtained pairs of opposed notches (11) in the facing edges of the slit (10), for engaging guide bushings (13) for connection screws (14) for connecting the modules (2) of the structure.

2. The equipment according to Claim 1, **characterized in that** said pairs of opposed notches (11) have a profile of the ark of a circle and define a seat with a circular shape for the respective guide bushing (13).

3. The equipment according to Claim 1, **characterized in that** each profile (2) has a pair of longitudinal cavities (8) parallel to one another, which define respective slits (10) parallel to one another, with two aligned series of seats defined by opposed notches (11), which are also parallel to one another, on each side of the sectional element (2).

4. The equipment according to Claim 3, **characterized in that** each sectional element (2) has a quadrilateral cross section.

5. The equipment according to any one of the preceding claims, **characterized in that** it further includes a plate (3) for connection to a robot, said plate being provided with holes (14) for engagement of connection screws to respective modules (2).

6. The equipment according to any one of the preceding claims, **characterized in that** it comprises a plurality of reference elements or positioning elements (P) joined to the aforesaid modular reticular structure (1) by means of respective auxiliary modular reticular structures, in which each of said auxiliary structures (4) comprises one or more bars (5) with circular cross section and one or more interconnection blocks (6), as well as one or more reference devices (19) for reference of the correct reciprocal position of each bar in relation to a respective block.

7. The equipment according to Claim 6, **characterized in that** each bar (5) has one end which carries a block (6) defining a passage (6c) for tightening within it another bar (5) and the opposite end which can be tightened within the block (6) carried by another bar (5).

8. The equipment according to Claim 6, **characterized in that** said reference device includes an annular element (19), comprising a hub (20), which is designed to be fitted on a bar (5) and is provided with at least one radial hole (21) for engaging a connection pin designed to be received in a radial hole (22) obtained in the bar (5), said annular element (19) further comprising a crown (23) with a circumferential series of holes (24) having axes which are parallel to the axis of the hub (20) and can be engaged selectively by one or more connection pins designed to be received in holes (25) made in a respective block (6) according to an axis parallel to the axis of the bar (5) on which the aforesaid annular element (19) is mounted.

## Patentansprüche

1. Ausrüstung, welche durch einen Industrieroboter zum Greifen von Stücken oder Baugruppen verwendet werden kann, welche eine modulare netzförmige Struktur (1) aufweist, welche durch eine Vielzahl von Modulen (2) vorgegeben wird, die miteinander über Schraubenverbindungen (14) verbunden sind, und von denen jede aus einem zusammensetzbaren Metallelement hergestellt ist, welches wenigstens eine longitudinale Mulde (8) aufweist, welche in eine externe Oberfläche (9) des zusammensetzbaren Elementes mittels eines longitudinalen Schlitzes (10) von kleinerer Breite als jener der Mulde (8) auslaufen,
**dadurch gekennzeichnet, dass** entlang jedem der Schlitze (10) bei Intervallen von fester vorbestimmter Länge (L) Paare von gegenüberliegenden Einkerbungen (11) erhalten werden, in den gegenüberliegenden Kanten des Schlitzes (10) zur Erfassung von Führungsbuchsen (13) für Verbindungsschrauben (14) zum Verbinden der Module (2) der Struktur.

2. Ausrüstung nach Anspruch 1, **dadurch gekennzeichnet, dass** die Paare von gegenüberliegenden Kerben (11) ein Profil des Kreisbogens haben und einen Sitz mit einer kreisförmigen Gestalt für die jeweilige Führungsbuchse (13) vorgeben.

3. Ausrüstung nach Anspruch 1, **dadurch gekennzeichnet, dass** jedes Profil (2) ein Paar longitudinaler Mulden (8) parallel zueinander aufweist, welche jeweilige Schlitze (10) parallel zueinander vorgeben, mit zwei ausgerichteten Folgen von Sitzen, die durch gegenüberliegende Kerben (11) vorgegeben werden, welche ebenso parallel zueinander sind, auf jeder Seite des zusammensetzbaren Elementes (2).

4. Ausrüstung nach Anspruch 3, **dadurch gekennzeichnet, dass** jedes zusammensetzbare Element (2) einen viereckigen Querschnitt aufweist.

5. Ausrüstung nach irgendeinem der vorhergehenden Ansprüche, **dadurch gekennzeichnet, dass** sie ferner eine Platte (3) zur Verbindung zu einem Roboter enthält, wobei die Platte mit Löchern (14) ausgestattet ist, zur Erfassung von Verbindungsschrauben zu jeweiligen Modulen (2).

6. Ausrüstung nach irgendeinem der vorhergehenden Ansprüche, **dadurch gekennzeichnet, dass** sie eine Vielzahl von Bezugselementen oder Positionierungselementen (P) aufweist, die mit der vorstehenden modularen netzförmigen Struktur (1) mittels jeweiliger modularer Hilfsstrukturen verbunden sind, in welcher jede der Hilfsstrukturen (4) eine oder mehrere Stangen (5) mit kreisförmigem Querschnitt aufweist und einen oder mehrere Verbindungsblöcke (6), ebenso wie eine oder mehrere Referenzvorrichtungen (19) zur Referenz der korrekten wechselseitigen Position von jeder Stange in Bezug auf einen jeweiligen Block.

7. Ausrüstung nach Anspruch 6, **dadurch gekennzeichnet, dass** jede Stange (5) ein Ende aufweist, welches einen Block (6) trägt, der eine Passage (6c) vorgibt, zur Befestigung einer anderen Stange (5) darin und deren gegenüberliegendes Ende innerhalb des Blockes (6) angezogen werden kann, der durch eine andere Stange (5) getragen wird.

8. Ausrüstung nach Anspruch 6, **dadurch gekennzeichnet, dass** die Referenzvorrichtung ein ringförmiges Element (19) enthält, das einen Nabe (20) aufweist, welche entworfen ist, um auf eine Stange (5) aufgepasst zu werden und mit wenigstens einem radialen Loch (21) ausgestattet ist, zur Erfassung eines Verbindungsstiftes, der entworfen ist, in einem radialen Loch (22), das in der Stange (5) erhalten wird, aufgenommen zu werden, wobei das ringförmige Element (19) ferner eine Krone (23) aufweist, mit einer umfänglichen Folge von Löchern (24), deren Achsen parallel zur Achse der Nabe (20) sind, und die wahlweise durch einen oder mehrere Verbindungsstifte erfasst werden können, die entworfen sind, in Löchern (25) aufgenommen zu werden, welche in einem jeweiligen Block (6) hergestellt sind, gemäß einer Achse parallel zur Achse der Stange (5), auf welcher das vorstehende ringförmige Element (19) montiert ist.

## Revendications

1. Equipement pouvant être utilisé par un robot industriel pour saisir des pièces ou des ensembles traités ou assemblés, comprenant une structure réticulaire modulaire (1), définie par une pluralité de modules (2) qui sont reliés ensemble au moyen de connexions à vis (14) et dont chacun est constitué d'un élément profilé en métal, comportant au moins une cavité longitudinale (8) qui débouche sur une surface externe (9) de l'élément profilé au moyen d'une fente longitudinale (10) d'une largeur inférieure à celle de la cavité (8),
**caractérisé en ce que** le long de chacune des fentes (10), à des intervalles d'une longueur prédéterminée fixe (L), on obtient des paires d'encoches opposées (11) dans les bords en regard de la fente (10), pour coopérer avec des douilles de guidage (13) pour les vis de connexion (14) destinées à raccorder les modules (2) de la structure.

2. Equipement selon la revendication 1, **caractérisé en ce que** lesdites paires d'encoches opposées (11) présentent un profil en arc de cercle et définissent une surface d'appui présentant une forme circulaire pour la douille de guidage respective (13).

3. Equipement selon la revendication 1, **caractérisé en ce que** chaque profilé (2) comporte une paire de cavités longitudinales (8) parallèles l'une à l'autre, qui définissent des fentes respectives (10) parallèles l'une à l'autre, deux séries alignées de surfaces d'appui étant définies par des encoches opposées (11), qui sont parallèles les unes aux autres, de chaque côté de l'élément profilé (2).

4. Equipement selon la revendication 3, **caractérisé en ce que** chaque élément profilé (2) présente une section transversale quadrilatérale.

5. Equipement selon l'une quelconque des revendications précédentes, **caractérisé en ce qu'**il comprend en outre une plaque (3) pour connexion à un robot, ladite plaque étant munie de trous (14) pour l'engagement des vis de connexion sur les modules respectifs (2).

6. Equipement selon l'une quelconque des revendications précédentes, **caractérisé en ce qu'**il comprend une pluralité d'éléments de référence ou d'éléments de positionnement (P) assemblés à la structure réticulaire modulaire susmentionnée (1) au moyen de structures réticulaires modulaires auxiliaires respectives, où chacune desdites structures auxiliaires (4) comprend une ou plusieurs barres (5) présentant une section transversale circulaire et un ou plusieurs blocs d'interconnexion (6), ainsi qu'un ou plusieurs dispositifs de référence (19) pour référence de la position réciproque correcte de chaque barre par rapport à un bloc respectif.

7. Equipement selon la revendication 6, **caractérisé en ce que** chaque barre (5) comporte une extrémité qui porte un bloc (6) définissant un passage (6c) pour serrer à l'intérieur de celui-ci une autre barre (5) et l'extrémité opposée pouvant être serrée dans le bloc (6) porté par une autre barre (5).

8. Equipement selon la revendication 6, **caractérisé en ce que** ledit dispositif de référence comprend un élément annulaire (19), comprenant un moyeu (20), qui est conçu pour être emboîté sur une barre (5) et est muni d'au moins un trou radial (21) pour coopérer avec un axe de connexion conçu pour être reçu dans un trou radial (22) obtenu dans la barre (5), ledit élément annulaire (19) comprenant en outre une couronne (23) dotée d'une série circonférentielle de trous (24) dont les axes sont parallèles à l'axe du moyeu (20) et peuvent être engagés sélectivement par un ou plusieurs axes de connexion conçus pour être reçus dans des trous (25) réalisés dans un bloc respectif (6) selon un axe parallèle à l'axe de la barre (5) sur laquelle l'élément annulaire susmentionné (19) est monté.
